# EUROPEAN PATENT APPLICATION

(11) **EP 1 826 690 A1**
(43) Date of publication of application: **29.08.2007**
(21) Application number: 07103068.8
(22) Date of filing: 26.02.2007
(51) Int. Cl.: G06F 17/30

(54) **Internet Access Apparatus and Method for Notifying of Web Page Update Using Same**

(30) Priority: 28.02.2006 KR 20060019317
(71) Applicant: Samsung Electronics Co., Ltd., Suwon-si, Gyeonggi-Do (KR)
(72) Inventor: Chang, In-Bum, Gyeonggi-do (KR); Lee, Chul-Hwan, Gyeonggi-do (KR)
(74) Representative: Grünecker, Kinkeldey, Stockmair & Schwanhäusser Anwaltssozietät

(57) **Abstract**

An Internet access apparatus and a method for notifying of a Web page update using the same. The Internet access apparatus stores access information regarding at least one Web page selected by a user and checks the update condition of the Web page at predetermined update monitoring periods, in order to determine if the Web page has been updated. If the Web page has been updated, the apparatus informs the user of the update in a predetermined mode. Based on the user's selection, the apparatus provides easy access to the updated Web page by using corresponding access information. As such, the user can be easily aware of update of Web pages of interest without having to manually checking for these updates. Moreover, the user can conveniently access the updated Web pages.

## Description

The present invention relates to Internet access. More particularly, the present invention relates to an apparatus and a method for notifying a user if at least one pre-selected Web page is updated.

In general, there are a number of methods for enabling Internet users to access desired Web pages without having to input URL (Uniform Resource Locater) addresses one by one. Examples of such methods include use of bookmarks and history lists.

The bookmarks are used in the following manner: when a user selects a Web page, its URL address is stored in a bookmark list. When the user selects the stored URL address later, the bookmark provides direct access to the Web page corresponding to the URL address. The history list enumerates Web pages accessed by the user. As the user browses through Web pages, they are added to the list. When the user selects one of the Web pages included in the list, the user is provided with direct access to the selected Web page.

As such, these Internet access methods enable users to access Web pages in an easier and faster manner. The methods are more advantageous in the case of an Internet access apparatus with no keyboard, such as a PDA (Personal Digital Assistant) or a mobile communication terminal, than in the case of a PC (Personal Computer) or a laptop computer, because the absence of keyboard makes it difficult to input URL addresses of desired Web pages.

However, conventional Internet access methods have a limitation in that, although they enable users to directly access pre-selected Web pages without inputting URL addresses, they cannot provide users with information regarding update of the Web pages, including newly posted materials, public notices, and news reports.

This means that, in order to check the update of a specific Web page, the user must access it manually or by using the bookmark or the history list, for example, even when the page has not changed, and therefore, the user need not actually access the page.

Accordingly, the present invention has been made to solve the above-mentioned problems occurring in the prior art. It is the object of the present invention is to provide an apparatus and a method for automatically notifying a user if pre-selected Web pages are updated.

This object is solved by the subject matter of the independent claims.

Preferred embodiments are defined in the dependent claims.

An aspect of the present invention is to provide an apparatus and a method for providing a user with substantially real-time access to an updated Web page so that the user can check the update instantly.

In order to accomplish the above, there is a provided an Internet access apparatus for notifying of a Web page update, including a timer; a memory unit for storing Internet access information regarding at least one Web page selected by a user and Web page time information corresponding to the Web page; a Web page update determination unit for determining if the Web page has been updated based on comparison between the We page time information and time information regarding a point of time related to a current update condition, the time information being obtained from Web page data for generating the Web page, the Web page data having been received from a Web server accessed in accordance with the Internet access information; and a control unit for checking if a predetermined period has expired by using the timer and accessing the Web sever corresponding to the Web page, the control unit extracting the time information regarding the point of time related to the current update condition from the Web page data for generating the Web page, the control unit checking if the Web page has been updated based on a result of the determination of whether the Web page has been updated, the control unit displaying the Web page when the Web page has been updated.

In accordance with another aspect of the present invention, there is provided a method for notifying if at least one Web page selected by a user has been updated or not by using an Internet access apparatus, the method including the storing access information regarding at least one Web page selected by the user in a user Web page list; accessing a Web server corresponding to the Web page, the access information of the Web page having been stored, in accordance with a predetermined monitoring period; receiving Web page data for generating the Web page from the Web server and determining if the Web page selected by the user has been updated or not by using the Web page data; and notifying the user of update of the Web page when it is determined that the Web page has been updated.

The present invention will be more apparent from the following detailed description taken in conjunction with the accompanying drawings, in which:
FIG. 1 is a block diagram illustrating the construction of an Internet access system including a mobile communication terminal according to the present invention;
FIG. 2 is a block diagram illustrating the construction of a mobile communication terminal according to the present invention;
FIG. 3 is a flowchart illustrating a process for displaying information regarding updated Web pages by a mobile communication terminal according to the present invention;
FIG. 4 is a flowchart illustrating a process for determining if a currently selected Web page has been updated by a mobile communication terminal according to the present invention;
FIG. 5 is a detailed flowchart illustrating a process for extracting time information from a currently accessed Web server by a mobile communication terminal according to the present invention; and
FIGs. 6A to 6C are screen shots illustrating screen displays on a mobile communication terminal according to the present invention.

Hereinafter, preferred embodiments of the present invention will be described with reference to the accompanying drawings. In the following description of the present invention, a detailed description of known functions and configurations incorporated herein is omitted to avoid making the subject matter of the present invention unclear.

The basic principle of the present invention will now be described for better understanding of the present invention. An Internet access apparatus according to the present invention stores access information regarding at least one Web page selected by a user. The Internet access apparatus checks the update condition of the Web page for each predetermined monitoring period. When the Web page is updated, the Internet access apparatus notifies the user of the update in a predetermined mode. Based on the user's selection, the Internet access apparatus uses the access information corresponding to the Web page and enables the user to easily access the updated Web page. As such, the Internet access apparatus automatically notifies the user of updated Web pages and provides easy access to them.

It will be assumed in the following description of the present invention, for clarity, that a mobile communication terminal, which is capable of accessing the Internet via a wireless Internet protocol (e.g. WAP (Wireless Application Protocol)), is used as an Internet access apparatus according to an embodiment of the present invention. However, it is to be noted that this is only an example, and the scope of the present invention is not limited thereto.

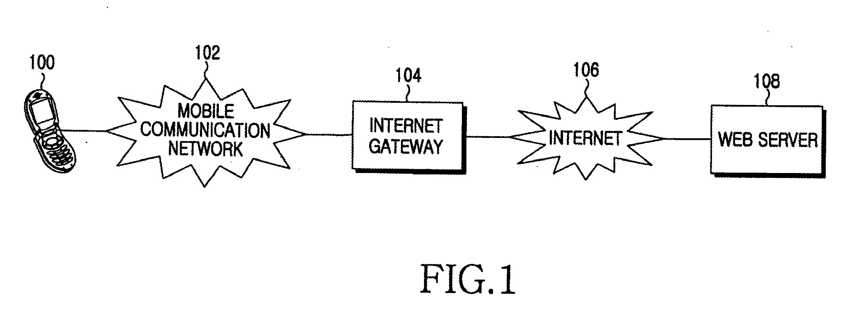

FIG. 1 is a block diagram illustrating the construction of an Internet access system including a mobile communication terminal according to the present invention.

Referring to FIG. 1, an Internet access system includes a mobile communication terminal 100, a mobile communication network 102, an Internet gateway 104, Internet 106, and a Web server 108. The mobile communication terminal 100, according to the present invention, accesses the Internet gateway 104 via the mobile communication network 102, when a user requests access to a Web page, and requests access to that Web page. The Internet gateway 104 accesses the Web server 108 in accordance with the URL address of the selected Web page via Internet 106 at the Web page access request of the mobile communication terminal 100. The Internet gateway 104 receives Web page data from the accessed Web server 108 via Internet 106 and transmits the received Web page data to the mobile communication terminal 100 via the mobile communication network 102. The mobile communication terminal 100 receives the Web page data, parses it, generates a Web page, and displays it.

The mobile communication terminal 100 adds the selected Web page to a predetermined user Web page list and stores access information regarding that Web page. The access information regarding the Web page contains the URL address of the selected Web page, for example, and is used to enable the user to access the corresponding Web page directly without having to input the URL address. In this case, the mobile communication terminal 100 according to the present invention stores time information regarding a point of time related to the current update condition of the selected Web page.

After time information and access information regarding at least one Web page of interest are stored in the mobile communication terminal 100, the mobile communication terminal 100 checks if a predetermined update monitoring period has expired. If the update monitoring period has expired, the mobile communication 100 requests access to Web pages enumerated in the user Web page list via the Internet gateway 104 and accesses respective Web servers 108 corresponding to the Web pages. The mobile communication terminal 100 receives Web page data from the Web servers 108. The mobile communication terminal 100 uses the received Web page data and pre-stored time information of the Web pages so as to confirm if the Web pages have been updated or not.

If any Web page enumerated in the user Web page list has been updated, the mobile communication terminal 100 displays the updated Web page to the user. As such, the user can check if Web pages have been updated without having to browse through the Web pages enumerated in the user Web page list. When the user selects one of the updated Web pages, the mobile communication terminal 100 accesses the corresponding Web server 108 by using pre-stored Web page access information corresponding to the Web page. The user is then provided with updated information from the currently accessed Web page.

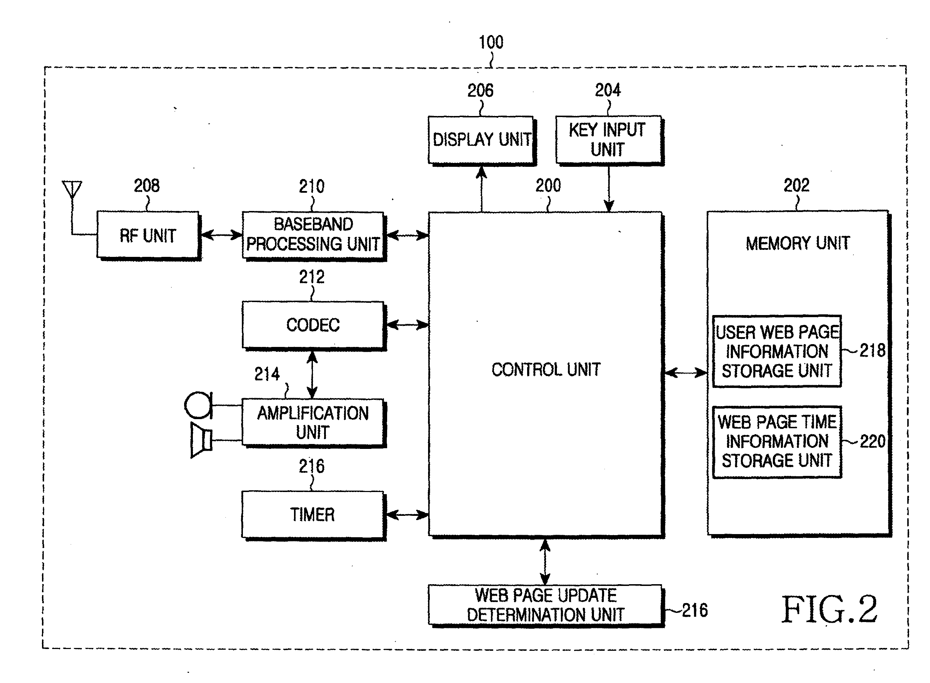

FIG. 2 is a block diagram illustrating the construction of a mobile communication terminal 100 according to the present invention.

Referring to FIG. 2, the mobile communication terminal 100 includes a control unit 200, as well as a memory unit 202, a key input unit 204, a display unit 206, a baseband processing unit 210, a codec (CODER/DECODER) 212, a timer 216, and a Web page update determination unit 216, all of which are connected to the control unit 200. The control unit 200 processes voice signals and data and controls each component of the mobile communication terminal 100 according to a protocol for a telephone call, data communication, or wireless Internet access. The control unit 200 receives the user's key input from the key input unit 204 and controls the display unit 206 so as to generate corresponding video information accordingly.

The control unit 200 accesses a Web server 108 via a wireless Internet protocol in accordance with the user's selection. The control unit 200 receives Web page data from the accessed Web server 108, generates a Web page, and displays it. If the user wants to add the currently accessed Web page to the user Web page list, the control unit 200 stores access information of the currently accessed Web page and time information thereof, which is related to the point of time based on the update condition of the accessed Web page, in the memory unit 202.

As used herein, the user Web page list refers to a list of Web pages, the access information of which has been stored in the memory unit 202 for easy access at a later time, as in the case of the above-mentioned bookmark list. When the user wants to access one of the Web pages enumerated in the user Web page list, he can gain direct access by simply selecting it from the list without inputting its URL address.

The control unit 200 checks if the update monitoring period has expired by checking the timer 216. If the update monitoring period has expired, the control unit 200 loads Web page access information regarding the Web pages enumerated in the user Web page list. The control unit 200 accesses respective Web servers 108 corresponding to the Web page access information, based on the wireless Internet protocol, and receives Web page data for generating Web pages from the accessed Web severs 108.

The control unit 200 uses the received Web page data and checks if corresponding Web pages have been updated. The control unit 200 extracts time information from the received Web page data. The time information extracted from the Web page data is related to the current update condition of the Web pages. Particularly, the information is associated with the time of recent update of the Web pages. The control unit 200 compares the extracted time information with corresponding Web page time information stored in the memory unit 202. If it is confirmed as a result of the comparison that the point of time based on the time information extracted from the received Web page data is preceded by the point of time based on the stored Web page time information, the Web page is considered to have been updated.

In this manner, the control unit 200 checks the update of all Web pages enumerated in the user Web page list. If any of them has been updated, the control unit 200 displays it to the user and updates its time information, which is stored in a Web page time information storage unit 220, in accordance with the time information extracted from the received Web page data.

When the user selects one of the updated Web pages, the control unit 200 accesses a Web sever 180 corresponding to the selected Web page based on its access information. The control unit 200 parses Web page data received from the accessed Web server 108, generates a Web page, and provides the user with it. Therefore, according to the present invention, the user is notified of update of Web pages of interest with to access them one by one for update checking. As such, the present invention advantageously provides substantially real-time access to updated Web pages.

The memory unit 202, which is connected to the control unit 200, has storage areas used to store access information of Web pages enumerated in the user Web page list and time information thereof, which is related to the point of time based on their current update condition. A storage area used to store access information of the Web pages will now be referred to as a user Web page information storage unit 218, and a storage area used to store time information thereof will now be referred to as a Web page time information storage unit 220.

The memory unit 220 includes a ROM (Read Only Memory), a flash memory, and a RAM (Random Access Memory). The ROM stores programs for processing and controlling of the control unit 200, as well as various kinds of reference data. The RAM acts as a working memory of the control unit 200. The flash memory provides an area used to store various types of updatable storage data. The Web page update determination unit 216 selects one of the Web pages enumerated in the user Web page list under the control of the control unit 200 and loads currently stored time information regarding the selected Web page from the Web page time information storage unit 220. The Web page update determination unit 216 extracts time information from Web page data, which has been received according to access information regarding the selected Web page. The Web page update determination unit 216 compares the point of time based on the extracted time information with that based on the loaded time information and confirms if the Web page has been updated. If the Web page has been updated, the Web page update determination unit 216 notifies the control unit 200 of the update.

The key input unit 204 has various types of keys, including numeric keys, and provides the control unit 200 with key input from the user. An RF (radio frequency) unit 208 transmits/receives RF signals to/from a base station. The RF unit 208 converts received signals into IF (Intermediate Frequency) signals and outputs the IF signals to the baseband processing unit 210 connected to the control unit 200. In addition, the RF unit 208 converts IF signals, which are inputted from the baseband processing unit 210, into RF signals and transmits them. The baseband processing unit 210 is a BBA (Baseband Analog ASIC) for providing an interface between the control unit 200 and the RF unit 208. The baseband processing unit 210 converts baseband digital signals, which are applied from the control unit 200, into analog IF signals and applies them to the RF unit 208. The baseband processing unit 210 converts analog IF signals, which are applied from the RF unit 208, into baseband digital signals and applies them to the control unit 200.

The codec 212, which is in connection with the control unit 200, is connected to a microphone and a speaker via an amplification unit 214. The codec 212 subjects voice signals, which are inputted from the microphone, to PCM (Pulse Code Modulation) encoding and outputs corresponding voice data to the control unit 200. The codec 212 subjects voice data, which is inputted from the control unit 200, to PCM decoding and outputs the decoded voice data to the speaker via the amplification unit 214. The amplification unit 214 amplifies voice signals, which are inputted from the microphone, or voice signals to be outputted to the speaker. The amplification unit 214 adjusts the volume of the speaker and the gain of the microphone under the control of the control unit 200.

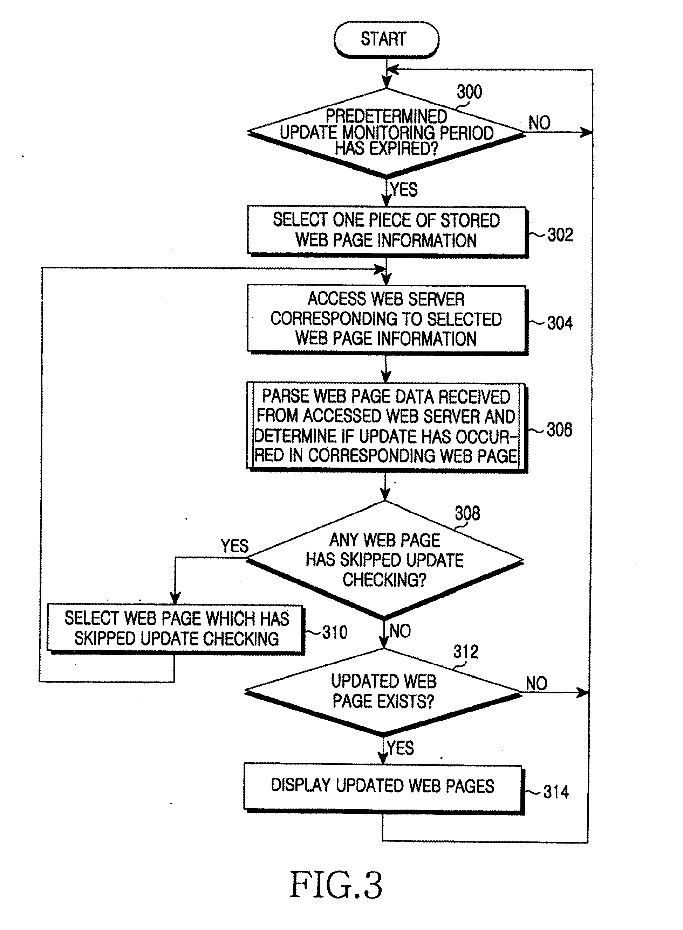

FIG. 3 is a flowchart illustrating a process for displaying information of updated Web pages by a mobile communication terminal according to of the present invention.

Referring to FIG. 3, the control unit 200 of the mobile communication terminal 100 checks if a predetermined update monitoring period has expired by whether the timer has expired 216 in step 300. If it is confirmed in step 300 that the period has expired, the control unit 200 resets the timer 216 and selects one piece of Web page information enumerated in the user Web page list. The control unit 200 proceeds to step 304, in which it loads Web page access information corresponding to the selected Web page and accesses a Web server 108 corresponding to the loaded Web page access information. The control unit 200 proceeds to step 306, in which it parses Web page data received from the accessed Web sever 108 and determines if the corresponding Web page has been updated.

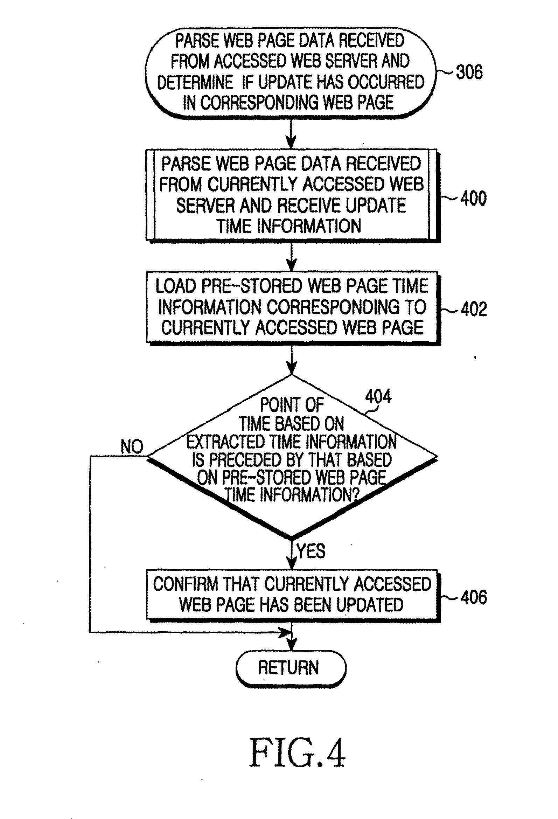

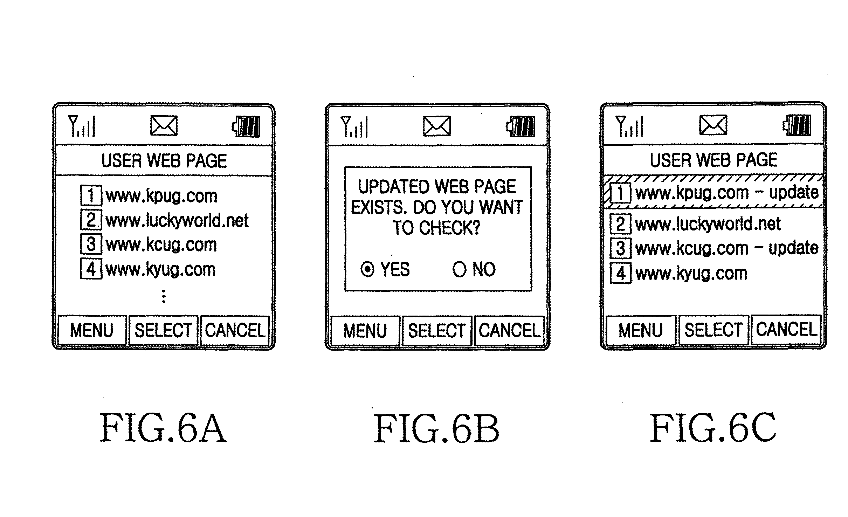

In step 306, the control unit 200 extracts time information from the received Web page data and compares the extracted time information with pre-stored time information corresponding to the currently selected Web page, in order to determine if the selected Web page has been updated. The time information extracted from the Web page data is related to the time of recent update of the Web page. Even if the control unit 200 cannot receive the entire data of the Web page from a corresponding Web server but receives its time information, the control unit 200 can still determine if the Web page has been updated by receiving the time information only, as will be described later in more detail with reference to FIGs. 4 and 6.

After determining if the selected Web page has been updated in step 306, the control unit 200 proceeds to step 308, in which it confirms if any Web page enumerated in the current user Web page list has skipped update checking. If it is confirmed in step 308 that a Web page has skipped update checking, the control unit 200 proceeds to step 310 and selects the Web page which has skipped update checking. The control unit 200 then proceeds to step 304, in which it accesses a Web server 108 according to Web page access information of the selected Web page. The control unit 200 checks the update of all Web pages enumerated in the user Web page list through steps 306 and 308.

If it is confirmed in step 308 that all Web pages enumerated in the user Web page list have undergone update checking, the control unit 200 proceeds to step 312 and confirms if any Web page enumerated in the user Web page list has been updated. If it is confirmed in step 312 that no Web page has been updated, the control unit 200 proceeds to step 300 again, in which it checks if the update monitoring period has expired.

If it is confirmed in step 312 that some Web pages enumerated in the user Web page list have been updated, the control unit 200 proceeds to step 314 and displays the updated Web pages. There are a number of methods for displaying the updated Web pages. For example, a voice or other message can be outputted so as to notify the update of a Web page. Alternatively, information regarding updated Web pages can be displayed through a pop-up window. An example of a display screen for notifying updated Web pages will be described later with reference to FIGs. 6A to 6C.

As such, the mobile communication terminal 100 according to the present invention checks if respective Web pages have been updated or not for each predetermined update monitoring period, even though the user does not browse through the Web pages. The mobile communication terminal 100 can perform the update checking by using a multi-threading technology, particularly by using multiple sockets which are open to the background of a currently-run application, without being noticed by the user. It can be easily understood by those skilled in the art that, when there is an updated Web page in this case, the communication terminal 100 notifies the user of it by displaying it.

FIG. 4 is a flow chart illustrating a method for determining if a currently selected Web page has been updated by a mobile communication terminal 100 according to the present invention, in step 306.

Referring to FIG. 4, the control unit 200, which has accessed a Web server according to access information of a currently selected Web page in step 304, proceeds to step 400, in which it parses Web page data received from the currently accessed Web server and extracts time information of the Web page. The extracted time information is related to the time of recent update of the Web page. It can be easily understood by those skilled in the art that, when the control unit 200 can extract time information of the Web page without receiving the entire Web page data, it does not have to receive the entire Web page data in step 400.

Particularly, when the control unit 200 can use only a part of the Web page data received from the Web server 108, or when it can selectively receive data containing time information, not the entire Web page data, it can extract Web page time information of the Web page, which has been received from the Web server, without receiving the entire Web page data.

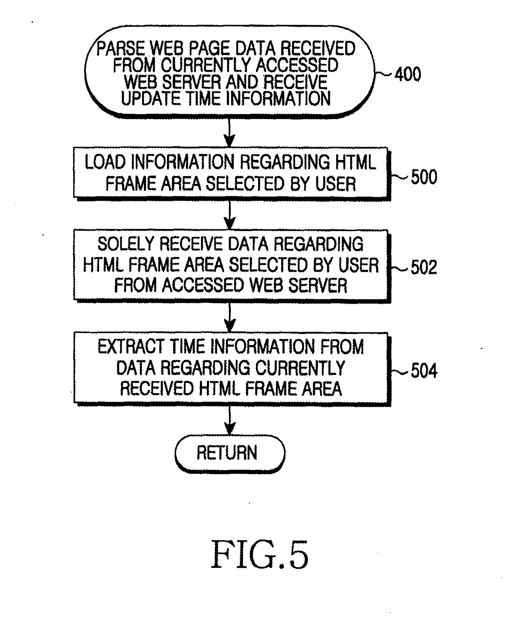

For example, it can be easily understood by those skilled in the art that, when the user selects at least one HTML (Hyper Text Markup Language) frame of a Web page, the control unit 200 may solely receive Web page data regarding the selected HTLM frame from the Web server. In this case, the control unit 200 can determine if the Web page has been updated by receiving data regarding the selected HTML frame only, not the entire Web page data. An example of this case will be described later with reference to FIG. 5.

After time information of the currently selected Web page is extracted in step 400, the control unit 200 proceeds to step 402 and loads Web page time information (corresponding to the currently selected Web page) stored in the Web page time information storage unit 220. The control unit 200 proceeds to step 404 and compares the point of time based on the extracted time information with that based on the loaded time information, in order to determine if the point of update time based on the extracted time information is preceded by that based on the pre-stored Web page time information.

Particularly, the control unit 200 compares the point of time based on the Web page time information with that based on the corresponding extracted update time information in step 404. The Web page time information corresponds to respective Web pages enumerated in the user Web page list, and the extracted update time information also corresponds to the respective Web pages enumerated therein. This is because the Web page time information corresponds to the extracted update time information.

If it is confirmed as a result of the comparison in step 404 that the point of time based on the extracted time information is not preceded by that based on the pre-stored Web page time information, the control unit 200 proceeds to step 308 and checks if any Web page enumerated in the current user Web page list has skipped update checking. If it is confirmed as a result of the comparison in step 404 that the point of update time based on the extracted time information is preceded by that based on the pre-stored Web page time information, the control unit 200 proceeds to step 406 and confirms that the currently accessed Web page has been updated. The control unit 200 then proceeds to step 308 and checks if any Web page enumerated in the current user Web page list has skipped update checking.

FIG. 5 is a flowchart illustrating a method for solely receiving Web page data regarding a specific HTML frame from a currently accessed Web server and extracting time information therefrom by a mobile communication terminal according to the present invention. This case holds when the user has pre-selected a HTML frame area from a currently accessed Web page for time information extraction.

Suppose that time information is extracted from a HTML frame area of a specific Web page. When the user adds a Web page to the user Web page list, the control unit 200 can request the user to select at least one HTML frame area, which constitute the Web page, so that time information can be extracted from the HTML frame area. When the user selects an HTML frame area, the control unit 200 may additionally extract information regarding the selected HTML frame area. The extracted information regarding the HTML frame area is stored in the memory unit 202. The HTML frame area information contains HTML frame area update time information, which is related to the time of recent update of the selected HTML frame area. Particularly, in the case shown in FIG. 5, the Web page time information may be the HTML frame area update time information.

Referring to FIG. 5, the control unit 200 uses access information of the currently selected Web page and accesses a corresponding Web server 108 in step 304. The control unit 200 proceeds to step 500 and loads information regarding the HTML frame area, based on the currently selected Web page, from the memory unit 202.

The control unit 200 proceeds to step 502 and receives data corresponding to the loaded HTML frame area data from the currently accessed Web server, which provides Web page data. This means that data regarding the HTML frame area selected by the user can be solely received in step 502. The control unit 200 proceeds to step 504 and extracts time information from the currently received HTML frame area data. The extracted time information is related to the time of recent update of the HTML frame area. The control unit 200 proceeds to step 402 and compares the point of time based on the extracted time information with that based on the loaded time information, in order to determine if the point of time based on the extracted time information is preceded by that based on the pre-stored Web page time information. The point of time based on the loaded time information corresponds to the point of time based on the update time information of the HTML frame area.

FIGs. 6A to 6C are screenshots illustrating screen displays on a mobile communication terminal according to the present invention.

FIG. 6A shows an example of a user Web page list enumerating Web pages selected by a user of a mobile communication terminal 100 according to the present invention. FIG. 6B shows an example of a pop-up window notifying the user that one of the Web pages enumerated in the user Web page list has been updated, after the control unit 200 has checked their update. FIG. 6C shows an example of information displayed on the screen with regard to the updated Web pages when the user has chosen to check the updated pages in the course of FIG. 6B.

When the user selects an updated Web page on the screen shown in FIG. 6C, the control unit 200 retrieves access information corresponding to the updated Web page from the user Web page information storage unit 218 and accesses a corresponding Web server 108. The control unit 200 receives Web page data from the accessed Web server 108 and parses it. The control unit 200 uses the parsed Web page data so as to generate a Web page and displays it. Then, the user can check updated contents of the Web page.

As described above, the present invention is advantageous in that the user is notified of update of selected Web pages with no need to access the Web pages for update checking on a one-by-one basis. Particularly, when a Web page of interest has been updated, the user is informed of the update for each predetermined update monitoring period, so that he can be aware of the update instantly. Therefore, if the present invention is applied to a Web site (e.g. a Web site dealing with secondhand goods or stocks), which needs to inform users of newly posted materials as soon as possible, users are informed of update of the Web site very rapidly. This avoids any disadvantages resulting from delayed notice of newly posted materials.

While the invention has been shown and described with reference to certain preferred embodiments thereof, it will be understood by those skilled in the art that various changes in form and details may be made therein without departing from the scope of the invention as defined by the appended claims. Particularly, although a mobile communication terminal has been used as the Internet access apparatus in the above description, the present invention is not limited thereto. For example, the present invention is also applicable to another type of Internet access apparatus, such as laptop computer. In this case, multiple sockets are open to the background for the sake of access to at least one Web page selected by the user, and time information regarding recent update of the Web page is received so as to determine if the Web page has been updated.

## Claims

1. An Internet access apparatus for notifying of a Web page update, comprising:
a timer;
a memory unit for storing Internet access information regarding at least one Web page selected by a user and Web page time information corresponding to the Web page;
a Web page update determination unit for determining if the Web page has been updated based on comparison between the Web page time information and time information regarding a point of time related to a current update condition, the time information being obtained from Web page data for generating the Web page, the Web page data having been received from a Web server accessed in accordance with the Internet access information; and
a control unit for checking if a predetermined period has expired by using the timer and accessing the Web sever corresponding to the Web page, extracting the time information regarding the point of time related to the current update condition from the Web page data for generating the Web page, checking if the Web page has been updated based on a result of the determination of whether the Web page has been updated and, displaying the Web page when the Web page has been updated.

2. The apparatus as claimed in claim 1, wherein the control unit is adapted to store access information regarding at least one Web page selected by the user in a user Web page list and determine if Web pages included in the user Web page list are updated.

3. The apparatus as claimed in claim 1 or 2, wherein the control unit is adapted to receive selection of an HTML frame area from the user, Web when the user selects a Web page and solely extracts time information regarding a point of time related to a current update condition of the HTML frame area selected by the user from Web page data regarding the Web page, the Web page data having been received from the Web server corresponding to the Web page, when the period expires.

4. The apparatus as claimed in one of claims 1 to 3, wherein the Web page time information is related to a point of time regarding an update condition of the Web page when the user selects the Web page.

5. The apparatus as claimed in claim 4, wherein the control unit is adapted to update Web page time information regarding Web pages when update of the Web pages having been confirmed, in accordance with the time information regarding the point of time related to the current update condition, the time information having been extracted from the Web page data.

6. The apparatus as claimed in one of claims 1 to 5, wherein the control unit is adapted to access the Web server corresponding to the Web page selected by the userWeb by using the Internet access information regarding the Web page and display the Web pate when the Web page has been updated.

7. The apparatus as claimed in one of claims 1 to 6, wherein the apparatus includes at least one of a mobile communication terminal, a personal computer, and a laptop computer.

8. The apparatus as claimed in one of claims 1 to 7, wherein the control unit is adapted to determine whether the Web page is updated based on a multi-threading technology by using multiple sockets opened to a background of an application currently run by the user.

9. A method for notifying if at least one Web page selected by a user has been updated using an Internet access apparatus, the method comprising the steps of:
(a) storing access information regarding at least one Web page selected by the user in a user Web page list;
(b) accessing a Web server corresponding to the Web page, the access information of the Web page having been stored, in accordance with a predetermined monitoring period;
(c) receiving Web page data for generating the Web page from the Web server and determining whether the Web page selected by the user has been updated using the Web page data; and
(d) notifying the user of update of the Web page when it is determined that the Web page has been updated.

10. The method as claimed in claim 9, wherein, in step (a), the access information regarding at least one Web page selected by the user is stored together with Web page time information regarding a point of time related to an update condition of the Web page.

11. The method as claimed in claim 9 or 10, wherein step (c) comprises:
parsing Web page data received from the Web server and extracting update time information regarding a recent update time and
determining whether the Web page has been updated by comparing a point of time based on Web page time information with a corresponding point of time based on the update time information.

12. The method as claimed in claim 10, wherein step (a) comprises:
receiving selection of an HTML frame area from the Web page to be stored in the user Web page list, wherein an update of the HTML frame area is to be determined, and
storing time information regarding a recent update time of the HTML frame area as the Web page time information.

13. The method as claimed in claim 12, wherein step (c) comprises:
loading the Web page time information regarding update time of the HTML frame area;
receiving only data regarding the HTML frame area selected by the user from the Web server;
extracting time information regarding the recent update time of the HTML frame area from the data regarding the HTML frame area; and
determining whether the HTML frame area has been updated by comparing a point of time based on the Web page time information with a point of time based on the time information regarding the recent update time of the HTML frame area.

14. The method as claimed in claim 13, wherein, in step (d), the Web page is displayed when the Web page has an updated HTML frame area.

15. The method as claimed in one of claims 9 to 14, wherein, in step (d), information regarding the Web page, the Web page having been updated, is provided by means of a voice message or a pop-up window.

16. The method as claimed in one of claims 9 to 15, wherein the Internet access apparatus is one selected from at least one of a mobile communication terminal, a personal computer, and a laptop computer.
